# EUROPÄISCHE PATENTSCHRIFT

(11) **EP 1 008 291 B1**
(45) Veröffentlichungstag und Bekanntmachung des Hinweises auf die Patenterteilung: **25.02.2004**
(21) Anmeldenummer: 99123632.4
(22) Anmeldetag: 27.11.1999
(51) Int. Cl.: A01D 45/02

(54) **Vorsatzgerät für Erntemaschine**
Attachment for harvesters
Attachement pour machine de récolte

(30) Priorität: 08.12.1998 DE 19856444
(43) Veröffentlichungstag der Anmeldung: 14.06.2000
(73) Patentinhaber: CLAAS Saulgau GmbH, 88340 Bad Saulgau (DE)
(72) Erfinder: Rauch, Hans, 88348 Saulgau (DE); Wicker, Anton, 88348 Saulgau (DE); Arnold, Rudolf, 88348 Saulgau (DE); Roth, Georg, 88348 Saulgau (DE)

(56) Entgegenhaltungen:
- EP-A- 0 508 189
- EP-A- 0 760 200
- DE-A- 3 909 754
- DE-U- 29 613 397
- GB-A- 2 012 154
- US-A- 5 040 362

## Beschreibung

Die Erfindung betrifft ein Vorsatzgerät für Erntemaschinen zum Aufnehmen und Weiterführen von stengeligem Erntegut nach dem Oberbegriff des Anspruchs 1.

Ein derartiges Vorsatzgerät ist bereits aus GB-A-2 012 154 bekannt.

Vorsatzgeräte zum Aufnehmen und Weiterführen von stengeligem Erntegut, wie Mais oder dergleichen sind bereits seit geraumer Zeit in Gebrauch. Insbesondere ist mit der EP-A-508 189 ein derartiges Vorsatzgerät beschrieben, bei dem mit mehreren Aufnahmeelementen das Erntegut nach dem Mähen in aufrechter Stellung mit entsprechenden Führungselementen aufgenommen und in Fahrtrichtung nach hinten zu einer Umlenkfördereinheit gefördert wird. Dort wird das Erntegut aufgenommen und von der Umlenkfördereinheit von seiner aufrechten Stellung in eine geneigte Stellung in einen Einzugsspalt verbracht, in dem das Erntegut mit dem bodenseitigen Ende des Stengels vorangeordnet zwischen Einzugswalzen eingezogen wird.

Die außenliegenden Aufnahmeelemente geben das von innen aufgenommene Erntegut hierbei an die weiter innen liegende Aufnahmeelemente ab, die den so gesammelten Strom von Erntegut an die Umlenkfördereinheit weitergeben.

Bei dieser Ausführung weisen die Aufnahmeelemente einen sehr großen Durchmesser auf, um eine entsprechende Arbeitsbreite zu überbrücken. Dies führt zu hohen Umfangsgeschwindigkeiten des Ernteguts am Aufnahmeelement, wodurch quer zur Fahrtrichtung stehende Führungselemente erforderlich werden, um das Erntegut in den Aufnahmeelementen entgegen den Zentriefugalkräften zu halten.

Weiterhin ist es ohne weitere Vergrößerung der Aufnahmeelemente nicht möglich, die Arbeitsbreite der Vorrichtung zu vergrößern.

Aufgabe der Erfindung ist es daher, ein Vorsatzgerät vorzuschlagen, bei dem zum einen bei Bedarf mit kleineren Aufnahmeelementen und somit mit geringeren Umfangsgeschwindigkeiten gearbeitet werden kann, wobei zudem eine Vergrößerung der Gesamtarbeitsbreite ohne Probleme ermöglicht wird.

Diese Aufgabe wird ausgehend von einem Vorsatzgerät der einleitend genannten Art durch die kennzeichnenden Merkmale des Anspruchs 1 gelöst.

Dementsprechend zeichnet sich die Erfindung dadurch aus, daß wenigstens ein von den Aufnahmeelementen unabhängiger in Fahrtrichtung hinter den Aufnahmeelementen befindlicher Querförderer vorgesehen ist, um Erntegut von wenigstens einem Aufnahmeelement aufzunehmen und der Umlenkfördereinheit zuzuführen.

Ein derartiger Querförderer ist in der Lage, Erntegut von einem oder mehreren Aufnahmeelementen, die aufgrund ihrer räumlichen Anordnung das Erntegut nicht mehr unmittelbar der Umlenkfördereinheit übergeben können aufzunehmen und der Umlenkfördereinheit zuzuführen. Durch einen derartigen zusätzlichen Querförderer ist es daher möglich, eine nahezu beliebige Anzahl von Aufnahmeelementen vorzusehen, wodurch die Größe der Aufnahmeelemente bei gleicher Gesamtarbeitsbreite des Vorsatzgerätes reduzierbar ist. Auch die Gesamtarbeitsbreite ist durch gewissermaßen modulare Ergänzung der einzelnen Baukomponenten ohne weiteres zu vergrößern.

Durch die in den Unteransprüchen aufgeführten Maßnahmen sind vorteilhafte Weiterbildungen und Ausführungen der Erfindung möglich.

In einer solchen vorteilhaften Weiterbildung der Erfindung werden zwei oder mehrere Querfördersegmente vorgesehen, die sich an einer Übergabestelle das Erntegut, das quer zur Fahrtrichtung der Erntemaschine gefördert wird, einander übergeben. Hierbei wird die Förderrichtung des Gutstroms nicht geändert, das heißt Umlenkvorgänge und damit verbundene Gutflußstörungen werden vermieden.

In einer weiteren vorteilhaften Ausführungsform der Erfindung wird die Umlenkfördereinheit, mit der das Erntegut in Einzugsrichtung, das heißt aus der Querrichtung in Fahrtrichtung umgelenkt und gegebenenfalls auch aus der aufrechten Stellung geschwenkt wird, in einen Endbereich eines Querförderers integriert. Hierdurch wird eine zusätzliche Umlenkfördereinheit entbehrlich, was den Fertigungsaufwand vermindert.

Die Umlenkfördereinheit wird unabhängig davon, ob sie in den Querförderer integriert oder als separate Fördereinheit vorgesehen ist, vorzugsweise so ausgebildet, daß das Erntegut aus der aufrechten Position herausgeschwenkt mit dem Fuß des Erntegutsstengels voran in einer geneigten Stellung dem Einzug mit entsprechenden Einzugswalzen zugeführt wird.

Ein erfindungsgemäßer Querförderer umfaßt in einer vorteilhaften Ausführungsform um Umlenkräder und/oder Umlenkwalzen umlaufende Umlaufelemente und/oder nebeneinander angeordnete Rotationselemente.

Vorteilhafterweise durchläuft der Erntegutstrom von der-Aufnahme durch die Aufnahmeelemente bis zum Einzug eine Aufwärtsbewegung, da bei gängigen Erntemaschinen der Einzugsspalt höher liegt, als die Aufnahme des Ernteguts erfolgt, das naturgemäß bodennah geschnitten werden muß.

Diese Höhendifferenz wird von einem die Umlenkeinheit umfassenden Querförderer in vorteilhafterweise dadurch überbrückt, daß wenigstens eine im Übergabebereich zum Einzug der Erntemaschine vorhandene Drehachse quer zur Fahrtrichtung geneigt ist. Hierdurch wird das im Bereich dieser Drehachse aus der Querrichtung in Fahrtrichtung umgelenkte Fördergut während der Umlenkung auf einfache Weise angehoben.

In weiteren vorteilhaften Ausführungsformen der Erfindung werden Führungs- und/oder Förderelemente vorgesehen, die im Umlenkbereich aus der Querrichtung in Fahrtrichtung das Erntegut aus der aufrechten Position in eine wenigstens geneigte oder aber in eine liegende Position bringen. Hierdurch wird der Einzug in den Einzugsspalt bzw. zwischen die Einzugswalzen der Erntemaschine vereinfacht.

In einer Weiterbildung dieser Ausführungsform wird der Umfang des Umlenkbereiches unten großer ausgebildet als oben. Hierdurch erfährt das Erntegut im Fußbereich des Stengels eine größere Beschleunigung während der Umlenkung, als'in weiter oben gelegenen Bereichen, wodurch die Stengel des Ernteguts wie gewünscht umgelegt und mit dem Stengelfuß voran in den Einzug verbracht werden.

In einer besonderen Ausführungsform der Erfindung werden die Umlaufelemente wenigstens eines Querförderers als Zugmittel ausgebildet, die in wenigstens zwei zueinander parallelen Ebenen in unterschiedlicher Höhe angeordnet sind. Hierdurch ist zum einen gewährleistet, daß das stengelige Erntegut in zwei verschiedenen Höhen von den Querförderern erfaßt und somit in aufrechter Position gehalten werden kann. Zum anderen ist durch die Verwendung mehrerer Zugmittel beispielsweise eine geneigte Anordnung der Drehachsen oder auch verschiedene Durchmesser z. B. auf unterschiedlicher Höhe der Umlaufräder möglich, indem die Länge der verschiedenen Zugmittel entsprechend angepaßt wird.

Vorteilhafterweise werden Zugmittel mit Mitnehmern versehen, die das zwischen den Zugmitteln und gegebenenfalls vorgesehenen wenigstens teilweise hierzu parallel verlaufenden Führungselementen befindliche Erntegut mitnehmen.

Bei dieser Ausbildung des Querförderers kann der oben angeführte größere Durchmesser im Bodenbereich dadurch bewirkt werden, daß das bodennahe Zugmittel um ein Umlenkrad mit größerem Durchmesser umgelenkt wird, als das weiter oben befindliche Zugmittel. Es kann anstelle einzelner Umlenkräder auch eine beispielsweise kegelstumpfförmige Umlenkwalze für mehrere Zugmittel verwendet werden.

Durch in vertikaler Richtung sich verjüngende Querförderer im Umlenk- und Übergabebereich des Ernteguts zum Einzug wird auch ein größerer Raum für das Blattvolumen des Ernteguts, beispielsweise von Maisstengeln geschaffen, wodurch das Umlegen derartigen Ernteguts ermöglicht wird.

In einer Weiterbildung der Erfindung werden einzelne Querfördersegmente mit einer unterschiedlichen Anzahl von Zugmitteln ausgestattet. Dies ermöglicht die Anpassung der Querfördereinheiten an den jeweils auftretenden Gutstrom. Insbesondere werden in einer vorteilhaften Ausführungsform die näher am Einzugsbereich liegenden Querfördersegmente mit einer größeren Anzahl von Zugelementen ausgestattet, da in der Regel der Gutstrom von Außen nach Innen zunimmt und somit durch die Erhöhung der Anzahl der Stützstellen pro Stengel ein sicherer Transport gewährleistet wird.

In einer besonderen Ausführungsform der Erfindung werden die Zugmittel durch Ketten und/oder Riemen gebildet. Derartige Bauarten haben sich bereits bei anderen Anwendungen in Erntegutmaschinen bewährt und sind vergleichsweise einfach zu realisieren.

In einer anderen Ausführungsform der Erfindung wird ein Querförderer aus einer Anzahl von nebeneinander angeordneten Fördertrommeln gebildet, die Mitnahmezinken aufweisen. Jede dieser Fördertrommeln gibt das Erntegut der nachfolgenden, wodurch sich in der Summe wiederum ein Querförderer über die gesamte notwendige Arbeitsbreite ergibt. Die Verwendung von Fördertrommeln ergibt eine besonders verschleißarme Ausführungsform.

In einer besonderen Weiterbildung dieser Ausführungsform werden die Mitnahmezinken einer Fördertrommel in mehreren Ebenen koaxial zueinander angeordnet. Hierdurch werden wiederum mehrere Stützstellen für das Erntegut geschaffen, wodurch sich eine sichere Gutmitnahme ergibt.

In einer Weiterbildung dieser Ausführungsform wird die dem Übergabe- und Umlenkbereich dem Einzug zugewandte Fördertrommel kegelstumpfförmig ausgeführt, wodurch sich wiederum im Fußbereich der Erntegutstengel eine stärkere Beschleunigung ergibt als in darüberliegenden Bereichen, so daß das Verbringen der Erntegutstengel in eine liegende Position unterstützt wird.

Zwei Ausführungsbeispiele der Erfindung sind in der Zeichnung dargestellt und werden anhand der Figuren nachfolgend näher erläutert.

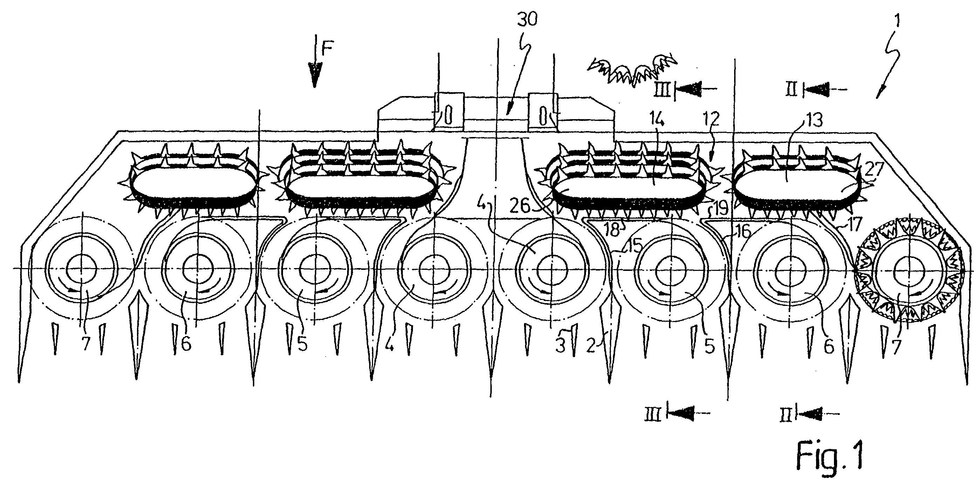

Im einzelnen zeigen
- Fig. 1: eine Draufsicht auf eine erste Ausführungsform der Erfindung,
- Fig. 2: einen schematischen Längsschnitt entlang Schnittlinie II in Fig. 1,
- Fig. 3: einen weiteren Längsschnitt durch eine Ausführungsform gemäß Fig. 1 entlang Schnittlinie III,
- Fig. 4: eine Draufsicht auf eine weitere Ausführungsform der Erfindung und,

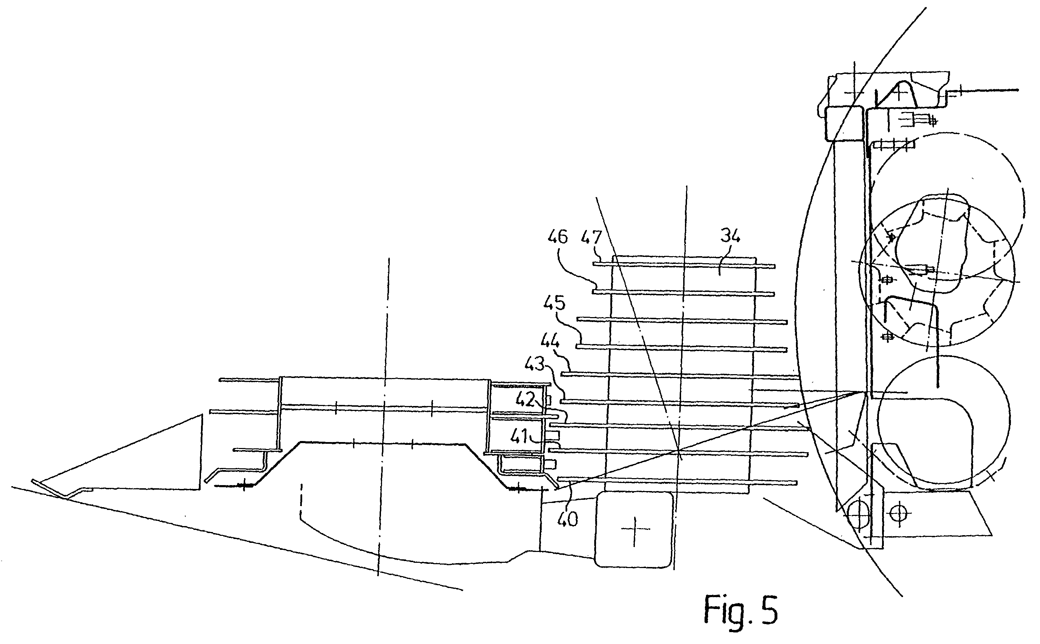

- Fig. 5: eine schematische Schnittdarstellung gemäß Linie IV in Fig. 4

Das Vorsatzgerät 1 ist an seiner Vorderseite mit einer Vielzahl von Führungsfingern 2 und Teilerspitzen 3 versehen, durch die das Erntegut bei der Vorwärtsbewegung der nicht näher dargestellten Erntemaschine in Richtung des Pfeils F als erstes geführt wird. Es folgen anschließend mehrere Aufnahmeelemente 4, 5, 6, 7 zur Erfassung des Ernteguts.

Das Vorsatzgerät 1 ist symmetrisch bezüglich der Mittelachse in Fahrtrichtung 11 aufgebaut, so daß die jeweils einander entsprechenden Baukomponenten mit den gleichen Bezugszeichen versehen sind.

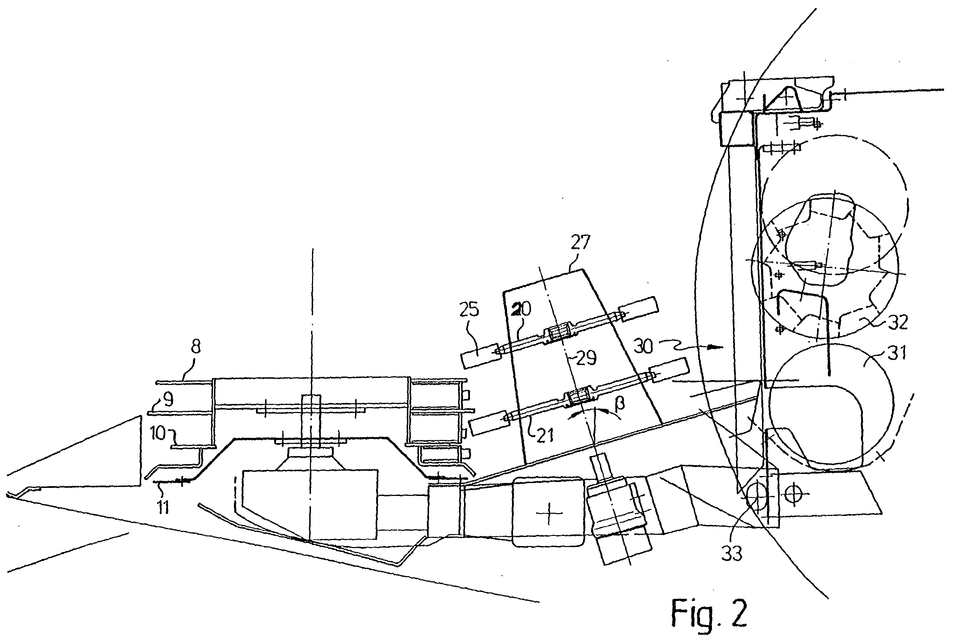

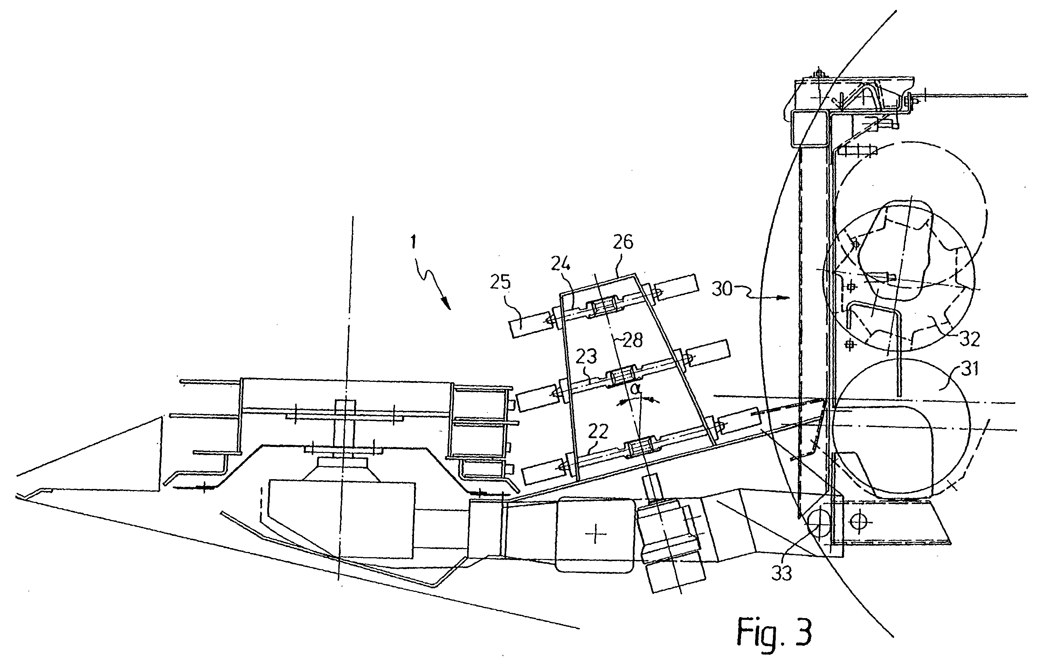

Die Aufnahmeelemente umfassen verschiedene Ebenen von zahnkranzartigen aufgebauten Mitnehmern 8, 9 ,10, wie insbesondere anhand der Fig. 2 und 3 ersichtlich. Unterhalb dieser Mitnehmer 8, 9, 10 ist eine Messerscheibe 11 angeordnet, die die in die Mitnehmer 8, 9, 10 einfahrenden Erntegutstengel schneidet.

Hinter den Aufnahmeelementen 4, 5, 6, 7 ist ein Querförderer 12 bestehend aus zwei Querfördersegmenten 13, 14, aufgebaut. Führungselemente 15, 16, 17 führen den Gutstrom von den Aufnahmeelementen 4, 5, 6, 7 zu den Querfördersegmenten 13, 14. Parallel zu den Querfördersegmenten 13, 14 angeordnete Parallelführungen 18, 19 sorgen für den Verbleib des Ernteguts an den Querfördersegmenten 13, 14.

Jedes Querfördersegment 13, 14 umfaßt in Form von Ketten oder Riemen ausgebildete Zugmittel 20, 21 bzw. 22, 23, 24. An den Zugmitteln 20 bis 24 sind Mitnahmeelemente 25 angebracht. Die Zugmittel 20 bis 24 laufen über kegelstumpfförmige Umlenkwalzen 26, 27, deren Drehachse 28, 29 um einen Winkel α bzw. β aus der Vertikalen geneigt ist.

Hinter dem Querförderer 12 befindet sich ein Einzug 30 mit angedeuteten Einzugswalzen 31, 32. Das gesamte Vorsatzgerät 1 ist um die Drehachse 33 drehbar an der Erntemaschine gelagert.

Das Vorsatzgerät 1 arbeitet auf die folgende Weise. Mit dem Auftreffen auf die Aufnahmeelemente 4 bis 7 werden die Stengel des Ernteguts, beispielsweise Maisstengel, mittels der Messerscheibe 11 geschnitten und sind in den Mitnehmern 8, 9, 10 gefangen. Durch die Drehung der Aufnahmeelemente 4 bis 7 werden die Stengel seitwärts abgetragen und gelangen in den Bereich der Führungselemente 15 bis 17. Hierdurch werden die Maisstengel in der weiteren Drehung der Aufnahmeelemente 4 bis 7 gezielt den Querfördersegmenten 13 bis 14 zugeführt.

Das äußere Aufnahmeelement 7 übergibt dabei den Gutstrom in einer schrägen Förderbewegung dem weiter innen gelegenen Aufnahmeelement 6 und wird dort mit dem vom Aufnahmeelement 6 abgeernteten Erntegut zu einem Gutstrom vereint. Dieser Gutstrom wird dem Querfördersegment 13 zugeführt. Die von den Aufnahmeelementen 4, 5 geförderten Gutströme werden über die Führungselemente 15, 16 dem Fördersegment 14 zugeführt.

Das Querfördersegment 13 umfaßt zwei Zugmittel 20, 21 und bietet somit dem Erntegut zwei Stützstellen, was für den im Außenbereich des Vorsatzgeräts 1 auftretenden Gutstrom ausreichend ist.

Durch die Parallelführung 19 wird der Gutstrom am Querfördersegment 13 gehalten, das das Erntegut mit Hilfe der Mitnehmer 25 in Querrichtung fördert und dem Querfördersegment 14 übergibt. Am Querfördersegment 14 vereint sich der Erntegutstrom vom Querfördersegment 13 mit dem von den Aufnahmeelementen 4, 5 zugeführten Erntegut. Es findet somit eine Vergrößerung des Erntegutstroms statt. Dem wird für einen sicheren Transport der Erntegutstengel durch die Anordnung von drei Zugmitteln 22, 23, 24 in unterschiedlichen Ebenen Rechnung getragen.

Das Querfördersegment 14 arbeitet im Bereich der innenseitigen Umlenkwalze 26 zugleich als Umlenkfördereinheit bzw. Übergabeeinheit in den Einzug 30. Durch die geneigte Anordnung der Drehachse 28 dieser Umlenkwalze 26 wird auf einfache Weise eine Höhendifferenz (vgl. Fig. 2 und 3) zum Einbringen der Erntegutstengel in den Einzug 30 überwunden.

Durch die kegelstumpfförmige Ausbildung der Umlenkwalze 26 wird das Erntegut im Bereich des unteren Zugmittels 22 stärker beschleunigt als im oberen Bereich des Zugmittels 24. Hierdurch wird das Erntegut von der aufrechten Position zu einer liegenden Position hin geneigt, wobei der Stengelfuß des Ernteguts voran in den Einzug 30 eingeführt wird. Diese Einzugsrichtung des Ernteguts ermöglicht eine gleichmäßige Verarbeitung des Ernteguts insbesondere im Hinblick auf das Häckseln in jeweils gleich große Teile, so daß sich ein möglichst homogenes Häckselgut ergibt, was für die Weiterverarbeitung als Futtermittel von Vorteil ist.

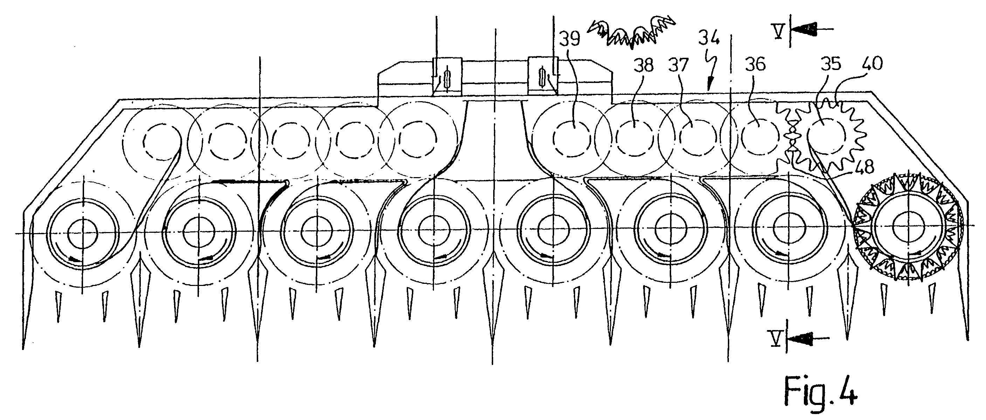

Die Ausführungsform gemäß Fig. 4 unterscheidet sich von der vorbeschriebenen Ausführungsform durch die besondere Ausbildung des Querförderers 34. Dieser besteht vorliegend aus mehreren Fördertrommeln, die umfangsseitig mit wiederum zahnkranzartigen Mitnahmeelementen 40 bis 47 ausgestattet sind.

Die Fördertrommeln 35 bis 39 eines Querförderers 34 drehen im gleichen Umlaufsinn und können beispielsweise über einen Riemen oder eine Kette 48 gemeinsam angetrieben werden.

Weiterhin können die Fördertrommeln 35, 39 unterschiedlich ausgebildet werden. So können beispielsweise die äußeren Fördertrommeln 35, 36 mit weniger Ebenen von Mitnahmeelementen 40 bis 47 versehen werden. Auch der Winkel der Drehachse der einzelnen Fördertrommeln 36, 39 im Bezug zur Senkrechten kann je nach Ausgestaltung der Mitnahmeelemente 40 bis 47 variieren. Ebenso kann die Form der Fördertrommeln neben der dargestellten zylindrischen Form eine Kegelstumpfform aufweisen, wie in der Beschreibungseinleitung aufgeführt. Die Form der Fördertrommeln 35 bis 39 kann durchaus auch unterschiedlich ausgebildet sein.

Insbesondere für die innenliegende Fördertrommel 39 die zugleich als Umlenk- und Übergabefördereinheit dient, empfiehlt sich die vorteilhafte Ausführungsvariante mit geneigter Drehachse und kegelstumpfförmiger Ausbildung, um einerseits die Höhendifferenz zum Einzug zu überwinden und andererseits die gewünschte Einzugsposition der Erntegustengel zu bewerkstelligen.

Bei Vorsatzgeräten 1 der beschriebenen Art können beliebig viele Aufnahmeelemente 4 bis 7 vorgesehen werden. Sie benötigen lediglich einen entsprechend dimensionierten Querförderer 12, 34 auf ihrer Rückseite. Dementsprechend können die einzelnen Aufnahmeelemente 4 bis 7 mit einem erheblich kleineren Durchmesser versehen werden, als es bislang bei derartigen Vorsatzgeräten der Fall war, wodurch die auf die in den Mitnehmern 8 bis 10 gefangenen Pflanzengutstengel wirkenden Zentriefugalkräfte reduziert sind. Weiterhin kann mit der erfindungsgemäßen Kombination von Aufnahmeelementen 4 bis 7 und Querförderern 12, 34 eine nahezu beliebige Arbeitsbreite eines Vorsatzgerätes 14 realisiert werden. Wesentlich ist dementsprechend gemäß der Erfindung, daß hinter den Aufnahmeelementen 4 bis 7 ein von diesen Aufnahmeelementen 4 bis 7 unabhängiger Querförderer 12, 34 vorgesehen wird.

### Bezugszeichenliste:

- 1: Vorsatzgerät
- 2: Führungsfinger
- 3: Teilerspitzen
- 4: Aufnahmeelement
- 5: Aufnahmeelement
- 6: Aufnahmeelement
- 7: Aufnahmeelement
- 8: Mitnehmer
- 9: Mitnehmer
- 10: Mitnehmer
- 11: Messerscheibe
- 12: Querförderer
- 13: Querfördersegment
- 14: Querfördersegment
- 15: Führungselement
- 16: Führungselement
- 17: Führungselement
- 18: Parallelführung
- 19: Parallelführung
- 20: Zugmittel
- 21: Zugmittel
- 22: Zugmittel
- 23: Zugmittel
- 24: Zugmittel
- 25: Mitnahmeelement
- 26: Umlenkwalze
- 27: Umlenkwalze
- 28: Drehachse
- 29: Drehachse
- 30: Einzug
- 31: Einzugswalze
- 32: Einzugswalze
- 33: Drehachse
- 34: Querförderer
- 35: Fördertrommel
- 36: Fördertrommel
- 37: Fördertrommel
- 38: Fördertrommel
- 39: Fördertrommel
- 40: Mitnahmeelement
- 41: Mitnahmeelement
- 42: Mitnahmeelement
- 43: Mitnahmeelement
- 44: Mitnahmeelement
- 45: Mitnahmeelement
- 46: Mitnahmeelement
- 47: Mitnahmeelement
- 48: Kette

## Patentansprüche

1. Vorsatzgerät für Erntemaschinen zum Aufnehmen und Weiterführen von stängeligem Erntegut mit wenigstens zwei in Arbeitsstellung quer zur Fahrtrichtung angeordneten Aufnahmeelementen zur Aufnahme und Förderung des Ernteguts und wenigstens einer, hinter den Aufnahmeelementen angeordneten Umlenkfördereinheit zur Übernahme des Ernteguts und Weiterführung zu einem Einzug der Erntemaschine, wobei wenigstens ein von den Aufnahmeelementen (4, 7) getrennt ausgebildeter Querförderer (12, 34) in Fahrtrichtung hinter den Aufnahmeelementen (4 bis 7) zur Übernahme des Ernteguts von den Aufnahmeelementen (4, 7) und zur Weitergabe an die Umlenkfördereinheit (26, 39) vorgesehen ist, **dadurch gekennzeichnet, dass** ein Querförderer (12) zwei oder mehrere Querfördersegmente (13, 14) und eine Übergabestelle zur Übergabe des Ernteguts von einem Querfördersegment (13, 36) zum nächsten Querfördersegment (14, 37) aufweist.

2. Vorsatzgerät nach einem der vorgenannten Ansprüche **dadurch gekennzeichnet, daß** die Umlenkfördereinheit (26, 39) im Endbereich des Querförderers (12, 34) in diesen integriert ist.

3. Vorsatzgerät nach einem der vorgenannten Ansprüche **dadurch gekennzeichnet, daß** der Querförderer (12, 34) um Umlenkräder bzw. Umlenkwalzen (26, 27) umlaufende Umlaufelemente (20 bis 24) und/oder nebeneinander angeordnete Rotationselemente (35 bis 39) aufweist.

4. Vorsatzgerät nach einem der vorgenannten Ansprüche **dadurch gekennzeichnet, daß** wenigstens eine geneigte Drehachse am Querförderer (12, 34) im Bereich der Umlenkfördereinheit (26, 39) vorgesehen ist.

5. Vorsatzgerät nach einem der vorgenannten Ansprüche **dadurch gekennzeichnet, daß** Führungs- und/oder Förderelemente (25) an der Umlenkfördereinheit (26, 39) vorgesehen sind, um das Erntegut aus einer aufrechten Position in eine wenigstens geneigte oder liegende Position zu bringen.

6. Vorsatzgerät nach einem der vorgenannten Ansprüche **dadurch gekennzeichnet, daß** der Umfang der Umlenkfördereinheit (26, 39) im Fußbereich des Ernteguts größer ist als in darüberliegenden Bereichen.

7. Vorsatzgerät nach einem der vorgenannten Ansprüche **dadurch gekennzeichnet, daß** bei einem Querförderer (12) mit Umlaufelementen Zugmittel (20 bis 24) in wenigstens zwei parallelen Ebenen angeordnet sind.

8. Vorsatzgerät nach einem der vorgenannten Ansprüche **dadurch gekennzeichnet, daß** unterschiedliche Querfördersegmente (13, 14) mit einer unterschiedlichen Anzahl von Zugmitteln (20 bis 24) versehen sind.

9. Vorsatzgerät nach einem der vorgenannten Ansprüche **dadurch gekennzeichnet, daß** näher am Einzug (30) angeordnete Querfördersegmente (13) eine größere Anzahl von Zugmitteln (22 bis 24) aufweisen als weiter außen angeordnete Querfördersegmente (14).

10. Vorsatzgerät nach einem der vorgenannten Ansprüche **dadurch gekennzeichnet, daß** die Zugmittel (22 bis 24) durch Ketten oder Riemen gebildet sind.

11. Vorsatzgerät nach einem der vorgenannten Ansprüche **dadurch gekennzeichnet, daß** ein Querförderer (34) mehrere, nebeneinander angeordnete Fördertrommeln (35 bis 39) mit Mitnahmeelementen (40 bis 47) umfaßt.

12. Vorsatzgerät nach einem der vorgenannten Ansprüche **dadurch gekennzeichnet, daß** die Mitnahmeelemente (40 bis 47) einer Fördertrommel (35 bis 39) in mehreren Ebenen koaxial zueinander angeordnet sind.

13. Vorsatzgerät nach einem der vorgenannten Ansprüche **dadurch gekennzeichnet, daß** wenigstens die dem Einzug (30) zugewandte Fördertrommel (39) kegelstumpfförmig ausgebildet ist.

14. Vorsatzgerät nach einem der vorgenannten Ansprüche **dadurch gekennzeichnet, daß** wenigstens die dem Einzug (30) zugewandte Fördertrommel (39) eine in Fahrtrichtung und/oder Querrichtung geneigte Drehachse aufweist.

## Claims

1. Attachment for harvesting machines for the reception and onward conveyance of stalked harvested crops with at least two reception elements, arranged transverse to the direction of travel in the operating position, for the reception and conveyance of the harvested crops and at least one deflecting conveyance unit, arranged behind the reception elements, for the taking over of the harvested crops and onward conveyance to an intake of the harvesting machine, wherein at least one cross-conveyor (12, 34) developed separately from the reception elements (4, 7) is provided behind the reception elements (4 to 7) in direction of travel for the taking over of the harvested crops from the reception elements (4, 7) and for onward conveyance to the deflecting conveyance unit (26, 39), **characterized in that** one cross-conveyor (12) has two or more cross-conveyance segments (13, 14) and a transfer point for the transfer of the harvested crops from one cross-conveyance segment (13, 36) to the next cross-conveyance segment (14, 37).

2. Attachment according to one of the aforementioned claims, **characterized in that** the deflecting conveyance unit (26, 39) is integrated in the end-zone of the cross-conveyor (12, 34) into the latter.

3. Attachment according to one of the aforementioned claims, **characterized in that** the cross-conveyor (12, 34) has peripheral elements (20 to 24) running round deflecting wheels or deflecting rolls (26, 27) and/or rotation elements (35 to 39) arranged next to one another.

4. Attachment according to one of the aforementioned claims, **characterized in that** at least one inclined axis of rotation is provided at the cross-conveyor (12, 34) in the area of the deflecting conveyance unit (26, 39).

5. Attachment according to one of the aforementioned claims, **characterized in that** guide and/or conveyance elements (25) are arranged at the deflecting conveyance unit (26, 39) in order to bring the harvested crops from an upright position into an at least inclined or horizontal position.

6. Attachment according to one of the aforementioned claims, **characterized in that** the extent of the deflecting conveyance unit (26, 39) is greater in the foot area of the harvested crops than in areas lying above them.

7. Attachment according to one of the aforementioned claims, **characterized in that** in the case of a cross-conveyor (12) with peripheral elements drawing means (20 to 24) are provided in at least two parallel planes.

8. Attachment according to one of the aforementioned claims, **characterized in that** different cross-conveyance segments (13, 14) are provided with a different number of drawing means (20 to 24).

9. Attachment according to one of the aforementioned claims, **characterized in that** cross-conveyance segments (13) arranged nearer to the intake (30) have a larger number of drawing means (22 to 24) than cross-conveyance segments arranged further out (14).

10. Attachment according to one of the aforementioned claims, **characterized in that** the drawing means (22 to 24) are formed by chains or belts.

11. Attachment according to one of the aforementioned claims, **characterized in that** one cross-conveyor (34) has several conveyance drums (35 to 39), arranged next to one another, with carrier elements (40 to 47).

12. Attachment according to one of the aforementioned claims, **characterized in that** the carrier elements (40 to 47) of one conveyance drum (35 to 39) are arranged coaxially relative to one another in several planes.

13. Attachment according to one of the aforementioned claims, **characterized in that** at least the conveyance drum (39) facing the intake (30) is developed in the form of a frustum.

14. Attachment according to one of the aforementioned claims, **characterized in that** at least the conveyance drum (39) facing the intake (30) has an axis of rotation inclined in direction of travel and/or cross-direction.

## Revendications

1. Outil frontal pour machine agricole de récolte, pour ramasser et transporter des produits de récolte à tiges, avec au moins deux éléments de ramassage disposés transversalement à la direction de déplacement pour ramasser et transporter le produit récolté et au moins un convoyeur de changement de direction disposé derrière les éléments de ramassage pour prendre en charge le produit récolté et l'acheminer vers une alimentation de la machine de récolte, au moins un convoyeur transversal (12, 34) séparé des éléments dé ramassage (4 à 7) étant prévu derrière lesdits éléments de ramassage (4 à 7), vu dans la direction déplacement, pour prendre en charge le produit récolté par les éléments de ramassage (4 à 7) et le transférer dans le convoyeur de changement de direction (26, 39), **caractérisé en ce qu'**un convoyeur transversal (12) comporte deux ou plusieurs segments de convoyeur transversal (13, 14) et un point de transfert pour le transfert du produit récolté d'un segment de convoyeur transversal (13, 36) au segment de convoyeur transversal (14, 37) suivant.

2. Outil frontal selon la revendication 1, **caractérisé en ce que** le convoyeur de changement de direction (26, 39) dans la région terminale du convoyeur transversal (12 , 34) est intégré à celui-ci.

3. Outil frontal selon une des revendications précédentes, **caractérisé en ce que** le convoyeur transversal (12, 34) comporte des éléments circulant en continu (20 à 24) qui se déplacent sur des roues ou des tambours de renvoi (26, 27) et/ou des éléments tournants (35 à 39) disposés les uns à côté des autres.

4. Outil frontal selon une des revendications précédentes, **caractérisé en ce qu'**il est prévu au moins un axe de rotation incliné dans le convoyeur transversal (12, 34) dans la région du convoyeur de changement de direction (26, 39).

5. Outil frontal selon une des revendications précédentes, **caractérisé en ce qu'**il est prévu des éléments de guidage et/ou de transport (25) dans le convoyeur de changement de direction (26, 39) pour amener le produit récolté d'une position verticale dans une position au moins inclinée ou couchée.

6. Outil frontal selon une des revendications précédentes, **caractérisé en ce que** la circonférence du convoyeur de changement de direction (26, 39) est plus grande dans la région du pied du produit récolté que dans les parties situées plus haut.

7. Outil frontal selon une des revendications précédentes, **caractérisé en ce que** dans un convoyeur transversal (12) avec des éléments circulant en continu, des moyens d'entraînement sans fin (20 à 24) sont disposés dans au moins deux plans parallèles.

8. Outil frontal selon une des revendications précédentes, **caractérisé en ce que** différents segments de convoyeur transversal (13, 14) sont pourvus d'un nombre différent de moyens d'entraînement sans fin (20 à 24).

9. Outil frontal selon une des revendications précédentes, **caractérisé en ce que** les segments de convoyeur transversal (13) plus proches de l'alimentation (30) présentent un nombre de moyens d'entraînement sans fin (22 à 24) plus grand que les segments de convoyeur transversal (14) situés plus à l'extérieur.

10. Outil frontal selon une des revendications précédentes, **caractérisé en ce que** les moyens d'entraînement sans fin (22 à 24) sont des courroies ou des chaînes.

11. Outil frontal selon une des revendications précédentes, **caractérisé en ce qu'**un convoyeur transversal (34) comprend plusieurs tambours de convoyeur (35 à 39) avec des éléments d'entraînement (40 à 47).

12. Outil frontal selon une des revendications précédentes, **caractérisé en ce que** les éléments d'entraînement (40 à 47) d'un tambour de convoyeur (35 à 39) sont disposés coaxialement les uns avec les autres dans plusieurs plans.

13. Outil frontal selon une des revendications précédentes, **caractérisé en ce qu'**au moins le tambour de convoyeur (39) tourné vers l'alimentation (30) est conformé en tronc de cône.

14. Outil frontal selon une des revendications précédentes, **caractérisé en ce qu'**au moins le tambour de convoyeur (39) tourné vers l'alimentation (30) présente un axe de rotation incliné dans la direction de déplacement ou dans la direction transversale.
